# EUROPEAN PATENT APPLICATION

(11) **EP 2 009 872 A1**
(43) Date of publication of application: **31.12.2008**
(21) Application number: 07012853.3
(22) Date of filing: 29.06.2007
(51) Int. Cl.: H04L 29/08

(54) **Method, communication system and communication device for determining the origin of data transmitted in a communication system**

(71) Applicant: Nokia Siemens Networks Oy, 02610 Espoo (FI)
(72) Inventor: Bahls, Thomas, 17489 Greifswald (DE); Duchow, Daniel, 17033 Neubrandenburg (DE)
(74) Representative: Bruglachner, Thomas E.

(57) **Abstract**

The invention relates to a method, a communication system and a communication device for determining the origin of data transmitted in a communication system. The invention particularly relates to packet switched communication networks. According to the invention information representing the approximate and/or exact location of at least one first communication device is added to the data in the at least one first communication device. In at least one second communication device the added information is received and analyzed. Preferably, the data is transmitted as data packets compliant to the internet protocol through the communication system and the information representing the location is added into the options field of the packet header. The information representing the location of the at least one first communication device may also be used to localize a subscriber sending an emergency call.

## Description

The invention relates to a method, a communication system and a communication device for determining the origin of data transmitted in a communication system.

In conventional fixed network telecommunication systems multiple users are connected to a plurality of first access nodes of said communication system. These first access nodes allocate the voice or data traffic from each of the users connected to it and transfer the allocated data into the main part of the communication system ("backbone"). In a DSL ("digital subscriber line") environment these first nodes are often referred to as digital subscriber line access multiplexers ("DSLAM"), for example. As the connection of the individual users to the backbone as well as the overall network management is handled by the network provider it is almost impossible for the end user (or outsiders) to manipulate the network or the network management data, for example.

Specifically, it is impossible for an end user to manipulate his personal identification data which is, in most cases, given through the allocation of his name or address and, of course, his access or telephone number. This characteristic of fixed network systems is often called "trust by wire" II as each user is uniquely identified via his telephone number that is allocated to only one specific subscriber line.

Therefore, every subscriber in one of these communication networks can be sure that when being called by a certain number or when calling a number his communication partner is the intended communication partner and not, for example, some kind of intruder or fraud.

The problem or disadvantage of the principle of "trust by wire" explained above is that concerning the internet, for example, the identification of a communication partner via his telephone number is not possible for an end user. When requesting a connection to a communication partner the end user can not be sure about neither the identity of the communication partner nor about his geographical location. This problem is especially serious in relation to security-relevant internet connections like online banking or the like. In these cases it would be important for the end user to know where the server he is connected to is located, or, more precisely, whether - regarding the above example of online banking - the server is geographically located near the respective bank. As a lot of internet frauds (for example the theft of internet online banking passwords, known as "phishing") come from all over the world it would be even helpful for the subscriber to be able to determine whether the server is in the same country as the bank, for example.

This disadvantage can especially occur in all packet-switched networks, as in these networks oftentimes no direct point-to-point connections are established ("connectionless networks").

Therefore, the object of the invention is to provide a method, a communication device and a communication system that overcome the above disadvantages and/or improve conventional communication networks, especially packet-switched networks.

This object is achieved through the features of the independent claims.

According to the present invention a method is provided for determining the origin of data transmitted in a communication system. The main aspect of the invention is that in at least one first communication device information representing the approximate and/or exact location of the at least one first communication device is added to the data, and in at least one second communication device the added information is received and analyzed. Advantageously, the location and identity of a communications partner can thus be checked by any end user. In the scope of this invention and this specification a communication device can be any communication element of the communication system including end devices connected to (or suitable for connection to) the main part of the network.

In an embodiment, the data transmitted in the communication system is transmitted in packets. The inventive method thus provides a principle like the "trust-by-wire" principle in traditional fixed networks even when using IP based transmission techniques, for example. The method is therefore particularly applicable in packet switched networks.

In another embodiment, the added information is added into the header of the data packets, preferably into the header of a data packet compliant with the internet protocol. Inside the packet header the "options" field may be used for the additional information. In this case no changes are needed for the internet protocol when implementing the inventive method.

As a further embodiment, data transmitted in the communication system is data concerning an emergency call. Advantageously, the location of a user sending an emergency call can thus be transmitted within the conventional data packets.

In yet another embodiment, the information representing the location can be derived from a global positioning system. Hence, the location can be determined automatically.

Further embodiments of the invention are specified in the depending claims. The object stated above is furthermore achieved by a communication system according to claim 10 and a communication device according to claims 11, 12 or 13 as described herein.

The present invention is described by way of exemplary embodiments of the invention and accompanying drawings. In the following figures:
- Fig.1: shows an exemplary schematic layout of a communication system;
- Fig.2: shows the schematic construction of the header of an IPv4 data packet.

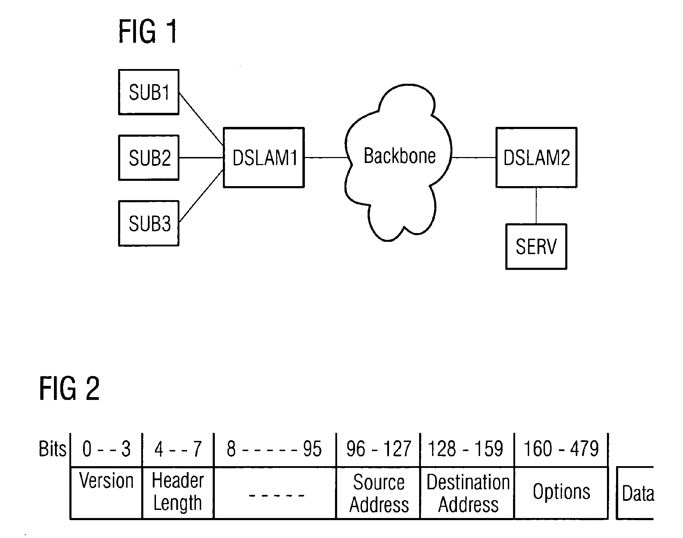

Fig.1 shows an exemplary construction of a telecommunication network according to the invention. Subscriber 1 (SUB1) is connected to a first network node, preferably a digital subscriber line access multiplexer "DSLAM" (DSLAM1). Although several more subscribers can be connected to DSLAM1, for reasons of clarity there are only two more subscribers (SUB2, SUB3) shown in Fig. 1. The subscribers (SUB1, SUB2, SUB3) are connected to DSLAM1 through conventional copper telephone lines (DSL1, DSL2, DSL3) using transmission methods like xDSL technologies, for example. DSLAM1 is connected to the main part of the communication system known as the "backbone" of the network. Another (second) network node (DSLAM2) is also connected to the backbone of the communication system. Besides, DSLAM2 has a link with an internet content server (SERV). The server SERV may comprise a memory storing information and data accessible through the internet. By way of example, server SERV is an internet server hosting the website of a financial institution or bank.

When subscriber SUB1 requests data or information from the bank's server SERV, the subscriber gets reliable information about the geographical location of server SERV according to the invention. For this, to all data packets that are sent from server SERV towards subscriber SUB1 information about the location of the nearest network node (regarding server SERV) is added to the original data packets.

This information is added to the data packets preferably inside the network node DSLAM2. The information about the location can be input in DSLAM2 manually by a technician, for example. Further possibilities, like transmitting the information to the network node via the communication network, inputting the information during a configuration process or deriving the information from a GPS (global positioning system) system installed inside the network node are also in the scope of the invention.

Data packets sent on the internet are normally compliant to the internet protocol version 4 (IPv4). According to this protocol all data is transmitted in packets, the packets consisting of two main parts each: a header and the actual data to be transmitted. Fig. 2 shows a simplified schematic construction of the header of data packets according to IPv4. For example, the header comprises information about the version of the internet protocol, the source and destination addresses, the header length and so forth.

As can be seen from Fig. 2, the header can also comprise additional information listed in the "options" field starting at bit 160 of the packet header. The field "options" is optional with limited length. Although the options fields is not often used in standard internet communication it is required for every network node to be able to read and interpret the options when handling and forwarding IPv4 data packets. It may be noted that according to the internet protocol version 6 there are provided optional header increments for additional information that can also be used for the inventive method.

According to the above embodiment of the invention the options field in the IPv4 header is used to store the geographic information. When receiving a data packet from server SERV, the network node DSLAM2 fills in information about its location into the options field. This information can be stored in the header either in clear text type, for example, or - as space within the "options" field of the IPv4 header is limited - in coded or data compressed form.

Furthermore, the information can be stored with the aid of a kind of identifier representing the node or the node's location respectively. The correlation between said identifiers and the exact geographic locations may be archived in a simple table stored inside each network node or in a database inside of or accessible by the nodes, for example. To be sure that no other data that may also be stored in the options field of the IPv4 header interferes with the location information according to the invention, the network node may also add a type identifier into the options field. This type identifier may be uniquely defined and refers to upcoming location information inside the options field of the packet header. Through such type identifiers the content of the "options" field can be accordingly labeled, in this case indicating the "location information" following.

The data packets with the additional information are then forwarded and routed through the backbone of the communication network. To verify whether the data packets are indeed sent from the intended server (i.e. the bank server SERV in this case) the subscriber can check the added information inside the options field of the IPv4 header and decide whether the data packets were sent from the expected location. Therefore, the data packets received at the end user are normally processed. The information from the options field is read out, interpreted and compared to values or locations allocated to the server SERV. If the added information corresponds to the expected results, the end user can be sure that he's connected to the right server. Again, it is required for any device handling IPv4 data packets to be able to readout the complete packet header (including the options field), so the effort to implement this verification feature is feasible without too much cost.

It may be noted that a communication system according to the invention can comprise more than the two network nodes shown in Fig. 1, of course. In these cases only the first network node (the one closest to the sending server or communication device) may add information about its location. All other network nodes that the data packets pass through do not change this information, but simply forward the data packets: if the options field is empty (concerning geographic information) a network node adds information about its location, if there's already location information present in the packet header, the respective network node will leave this information unaltered.

With the method according to the invention it is impossible for any intruder or fraud to pretend to be someone else when the access and the backbone (or core) part of communication network is protected. As these parts of a network are normally accessible only for the carrier or operator of the network the end user can be assured that no external person can manipulate the communication.

The inventive method to determine the origin of data in a network may also be implemented as an additional feature directly into the end devices (SERV1 in the above embodiment). In this case the end devices themselves are capable of adding information about their location directly into the IPv4 header. This information can be input during maintenance, for example. When mobile devices are considered this information can preferably be derived from GPS systems inside the end devices. Nonetheless, other methods of inputting the location information like manually configuring the end device accordingly are feasible, too, of course.

When the location information is added by an end device a supplemental process can be implemented to verify this information. For example, the first network node connected to said end device checks the added information. When this added location information transmitted from the end device matches with the network node's own location information (e.g. that the location indicated by the end device corresponds approximately with the node's actual location) the added information can be labeled as correct. Otherwise the information can be either labeled as presumably wrong (by means of additional information in the options field of the IPv4 header, for example) or it may also be immediately erased or overwritten with the correct information by the network node. In this manner, the possibility that an end device transmits faulty location information can be ruled out and pretended location information (for example transmitted by a fraud pretending to be a financial institution as described above) can be detected.

If the communication runs over more than one communication network (i.e. the data passes through different networks operated by different carriers, for example), it is necessary to hand over the information about the location of the first communication device. In these cases it may be helpful to add information that the packets derive from another network. This information can be added at the edge routers between the respective networks, for example. If the packets pass through yet another network, information about this network may also be added, additionally or as replacement for any previous network information.

In another embodiment of the invention the location information is not added at the network node closest to the sending device, but in any other network node of the communication system the data packets are passed through. This can be advantageous in cases where it is important to know if the data packets have crossed a certain location or country, for example.

The inventive method can also be used in another embodiment. If a subscriber uses a VoIP (voice over IP) end device to make an emergency call, the method according to the invention can be carried out. In this case the end device itself may add information about its location into the options field of the IPv4 header. Again, this information can be derived from a GPS unit incorporated in the end device or input into the device during configuration, for example. In the emergency call center this information can be used to determine the caller's location.

If the end device does not possess GPS functionality, the inventive method can be carried out inside the closest network node. I.e. all (or most) network nodes comprise means for detecting that a call is indeed an emergency call. If in a network node an emergency call is detected (and the location field of the header is still empty concerning location information) information about the network node's position is added into the data packets. Additionally, information identifying the caller or information about the port number of the caller may also be added. Thus, at least an approximate location of the user sending the emergency call can be determined in the emergency call center. The functionality of detecting an emergency call automatically inside the network nodes or DSLAMs may also be used to route emergency calls directly to the closest emergency call center.

In the case of an emergency call, the method for checking the location information mentioned above can be performed, too. For example, when a network node detects an emergency call the location information can be checked inside the node to ensure that the information about the origin of the emergency call is correct.

## Claims

1. Method for determining the origin of data transmitted in a communication system,
**characterized in that**
in at least one first communication device information representing the approximate and/or exact location of the at least one first communication device is added to the data, and in at least one second communication device the added information is received and analyzed.

2. Method according to claim 1,
**characterized in that**
the data transmitted in the communication system is transmitted in packets.

3. Method according to claims 1 or 2,
**characterized in that**
the added information is added into the header of the data packets.

4. Method according to one of the preceding claims,
**characterized in that**
the data transmitted in the communication system is compliant to the internet protocol.

5. Method according to claim 4,
**characterized in that**
the added information is added into an optional field for additional header information of the internet protocol packet header.

6. Method according to one of the preceding claims,
**characterized in that**
the data transmitted in the communication system is data concerning an emergency call.

7. Method according to one of the preceding claims,
**characterized in that**
the information representing the approximate and/or exact location is
- information about the actual position of the at least one first communication device and/or
- information about a line and/or a port number and/or
- information about a port-ID and/or a slot-ID and/or a node-ID and/or
- a combination of at least two of the preceding information forms.

8. Method according to one of the preceding claims,
**characterized in that**
the information representing the approximate and/or exact location is derived from a global positioning system and/or determined manually.

9. Method according to one of the preceding claims,
**characterized in that**
through the analysis of the added information it is determined whether the added information is correct or not.

10. Communication system comprising at least one first communication device and at least one second communication device,
**characterized in that**
means are provided in the at least one first communication device for adding information representing the approximate and/or exact location of the at least one first communication device to data transmitted in the communication system, means are provided in the at least one second communication device for receiving and analyzing the added information, and that means are provided for determining the origin of the data.

11. Communication device,
**characterized in that**
means are provided for adding information representing the approximate and/or exact location of said communication device to the data.

12. Communication device for determining the origin of data transmitted in a communication system,
**characterized in that**
means are provided for receiving and analyzing information representing the approximate and/or exact location of said or another communication device added to the data.

13. Communication device for determining the origin of data transmitted in a communication system,
**characterized in that**
means are provided for adding information representing the approximate and/or exact location of said communication device to the data and means are provided for receiving and analyzing of information added to the data.

14. Communication device according to one of the claims 11, 12 or 13,
**characterized in that**
the communication device is a network node in the communication system.

15. Communication device according to one of the claims 11, 12 or 13,
**characterized in that**
the communication device is an end device.

16. Communication device according to one of the claims 11 to 15,
**characterized in that**
means are provided to determine the approximate and/or exact location of the communication device.

17. Communication device according to claim 16,
**characterized in that**
the means to determine the approximate and/or exact location of the communication device is a global positioning system.

18. Communication device according to claims 11 to 17,
**characterized in that**
means are provided to determine whether the data transmitted in the communication system is data concerning an emergency call.
